Europäisches Patentamt

European Patent Office

Office européen des brevets

(19)

(11) Veröffentlichungsnummer: **0 164 777 B1**

# (12) EUROPÄISCHE PATENTSCHRIFT

(45) Veröffentlichungstag der Patentschrift: **23.10.91**

(51) Int. Cl.⁵: **C22B 34/12**

(21) Anmeldenummer: **85200719.4**

(22) Anmeldetag: **08.05.85**

(54) **Verfahren zur Herstellung eines Titandioxid-Konzentrats aus titandioxidhaltigen Vorstoffen.**

(30) Priorität: **17.05.84 DE 3418269**

(43) Veröffentlichungstag der Anmeldung:
**18.12.85 Patentblatt 85/51**

(45) Bekanntmachung des Hinweises auf die
Patenterteilung:
**23.10.91 Patentblatt 91/43**

(84) Benannte Vertragsstaaten:
**DE FR GB**

(56) Entgegenhaltungen:
**FR-A- 2 073 151        FR-A- 2 128 309**
**US-A- 2 441 856        US-A- 2 770 529**
**US-A- 3 193 376        US-A- 3 368 870**
**US-A- 3 428 427        US-A- 3 647 414**
**US-A- 3 777 013**

**DERWENT JAPANESE PATENT REPORTS,
Sektion M25, Band 74, Seite 51, Derwent Publications Ltd, London, GB; & JP-A-74 045 967 (ISHIHARA SANGYO KAISHA LTD) 07-12-1974**

**CHEMICAL ABSTRACTS, Band 99, Nr. 2, 1983, Seite 103, Zusammenfassung Nr. 7632k, Columbus, Ohio, US; M. ZAHARESCU et al.: "Relations between mineral components of** titaniferous products and acid extraction of iron compounds from these products. II. Relation between structure and quality of synthetic rutile produced in a micropilot burning kiln", & REV. CHIM. (BUCHAREST) 1983, 34(3), 216-20

(73) Patentinhaber: **METALLGESELLSCHAFT AG
Reuterweg 14 Postfach 3724
W-6000 Frankfurt/M.1(DE)**

(72) Erfinder: **Röhrborn, Hans-Joachim, Dr.
Terniepenweg 88
W-4133 Neukirchen-Vluyn(DE)**

(74) Vertreter: **Rieger, Harald, Dr.
Reuterweg 14
W-6000 Frankfurt am Main(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Gewinnung eines $TiO_2$-Konzentrats aus $TiO_2$-haltigen Vorstoffen.

In der US-PS 3,368,870 wird ein Prozeß zur Aufbereitung von titanhaltigen Erzen beschrieben, bei dem das Erz bei höheren Temperaturen und höheren Drücken in einer ersten Laugungsstufe mit einer 25 bis 55 %igen Schwefelsäure versetzt wird. Anschließend wird dem Erz in einer zweiten Laugungsstufe eine 25 bis 40 %ige Schwefelsäure im Überschuß zugegeben, wobei ein $TiO_2$-Konzentrat entsteht.

Die US-PS 3,647,414 beschreibt ein Verfahren zur Herstellung von $TiO_2$, bei dem feinzerteilter Ilmenit zunächst unter reduzierenden Bedingungen aufgeheizt wird, bis sämtliche Eisenverbindungen zum metallischen Eisen reduziert worden sind. Das metallhaltige Erz wird anschließend nach Entfernung der Gangart 5 bis 30 Minuten mit Schwefelsäure in Kontakt gebracht, um das metallische Eisen in wasserlösliche Eisensulfate zu überführen. Anschließend wird das gelaugte Erz mit einem Oxidationsmittel versetzt, wobei als Oxidationsmittel Eisensalze und Salpetersäure zum Einsatz kommen. Nach 5 bis 15 Minuten wird die Lösung filtriert und das gelaugte Erz gewaschen.

Aus der US-PS 3,777,013 ist es bekannt, Ilmenit zur Herstellung von synthetischem Rutil mit verdünnter Mineralsäure in einem zweistufigen Laugungsprozeß zu behandeln. Nach dem vorbekannten Verfahren wird Ilmenit mit verdünnter Salzsäure in einer ersten Laugungsstufe unter Herauslösen von Eisenoxid behandelt, der abgetrennte Feststoff wird dann bei Temperaturen bis 900 °C mit einem reduzierenden Gas zwecks Reduktion der höheren Eisenoxide behandelt, das reduzierte Gut wird in einer zweiten Laugungsstufe einer Laugung mit verdünnter Salzsäure unterzogen und der Rückstand, der mehr als 90 % $TiO_2$ enthalten soll, wird anschließend abgetrennt. Die Laugungen werden bei Temperaturen zwischen 90 und 110 °C vorgenommen. Das vorbekannte Verfahren weist Nachteile auf, da die Laugung einen erheblichen Zeitaufwand erfordert und das Verfahren auch nicht auf die Verwendung von Abfallsäuren eingerichtet ist. Die Korrosion durch HCl stellt ein enormes und nur mit hohem technischen und finanziellen Aufwand beherrschbares Problem dar. Es entstehen ferner nur schwierig zu entsorgende HCl-saure Metallchloridlösungen. Bei nicht vorgenommener Regenerierung dieser Lösungen zum Zwecke der Rückgewinnung und Rückführung der Salzsäure scheitert dieses Verfahren praktisch an der nicht vorhandenen Wirtschaftlichkeit, insbesondere wegen der hohen Kosten für die Salzsäure.

Der Erfindung liegt daher die Aufgabe zugrunde, ein Verfahren zur Herstellung von $TiO_2$-Konzentraten aus $TiO_2$-haltigen Vorstoffen unter Verwendung von Dünnsäure bereitzustellen.

Die der Erfindung zugrundeliegende Aufgabe wird durch ein Verfahren zur Gewinnung eines $TiO_2$-Konzentrats aus titandioxidhaltigen Vorstoffen gelöst, bei dem ein $TiO_2$-haltiger Vorstoff in einer ersten Laugungsstufe bei einer Temperatur von 160 bis 180 °C und erhöhtem Druck mit Dünnsäure gelaugt wird, wobei ein Zwischenkonzentrat mit einem $TiO_2$-Gehalt von ca. 60 % eingestellt wird, das anschließend mit festem kohlehaltigen Brennstoff nach ggf. vorangehender Oxidation reduziert wird, wobei das reduzierte Produkt mit dem Dünnsäurefiltrat der ersten Laugungsstufe unter vollständigem Verbrauch der freien Schwefelsäure bei Temperaturen zwischen 60 und 180 °C und ggf. erhöhtem Druck gelaugt wird und ein Konzentrat mit einem $TiO_2$-Gehalt von mehr als 80 % eingestellt wird und im Filtrat das Eisensulfatheptahydrat auskristallisiert wird.

Zur Durchführung des erfindungsgemäßen Verfahrens wird der $TiO_2$-haltige Vorstoff mechanisch aufbereitet. Der z.B. feinteilige Ilmenit einer Korngröße von weniger als 60 μm und einer beispielsweisen Zusammensetzung von 45 % $TiO_2$, 34 % FeO, 12 % $Fe_2O_3$, 5 % MgO, 4 % $SiO_2$, wird in einen Druckreaktor eingegeben und mit Dünnsäure aus der $TiO_2$-Herstellung versetzt. Die Dünnsäure hat im allgemeinen einen Gehalt an freier Schwefelsäure zwischen 20 und 25 %. Das Verhältnis eingesetzte Dünnsäure zu $TiO_2$-Rohstoff wird so gewählt, daß im Gesamtprozeß bzw. in den beiden Laugungsstufen die freie Schwefelsäure der eingesetzten Dünnsäure praktisch vollständig verbraucht und lediglich ein Restgehalt von weniger als 1 % verbleibt. Die mittlere Reaktionsdauer bzw. Verweilzeit im Reaktor beträgt im allgemeinen 0,5 bis 2 Stunden und liegt vorzugsweise bei 1 Stunde. Bei einer Temperatur von 180 °C und einem Druck von 10 bar wird in der ersten Laugungsstufe bereits nach einer Verweilzeit von 1 Stunde eine erhebliche Konzentrierung erreicht und - ausgehend von z.B. einem Vorstoff mit 45 % $TiO_2$ - ein Zwischenkonzentrat mit einen $TiO_2$-Gehalt von ca. 65 % erzielt.

Nach Beendigung der Reaktion und Entspannung des Druckreaktors erfolgt die Abtrennung des Feststoffs über konventionelle Trennaggregate wie z.B. Drehfilter, Filterpressen oder Zentrifugen. Das Zwischenkonzentrat, das, auf Trockensubstanz berechnet, einen mittleren $TiO_2$-Gehalt von ca. 60 % hat, wird in an sich bekannten Apparaten wie z.B. Wirbelschichtofen oder Drehrohrofen mit festen kohlehaltigen Brennstoff, wie Braun- oder Steinkohle, Kohlegruß in an dich bekannter Weise reduziert. Dabei wird der Eiseninhalt praktisch ausschließlich zu metallischem Eisen reduziert. Die Reduktion kann so geführt werden, daß jeder gewünschte Reduktionsgrad für das Eisen von 1 bis ca. 95 % eingestellt werden kann.

Ggf. kann vor der Reduktion noch eine Oxidationsbehandlung vorgenommen werden, wenn, abhängig vom Verwitterungsgrad des zum Einsatz gelangenden z.B. Ilmenits, das mineralogisch gebundene Eisen nicht direkt der Reduktion zu metallischem Eisen zugänglich ist. Durch die Oxidationsbehandlung wird das Kristallgitter des Ilmenits zerstört und das Eisen in später leicht zu Fe-Metall reduzierbares $Fe_2O_3$ überführt.

Das Konzentrat, in dem der Eiseninhalt mehr oder weniger vollständig in metallischer Form vorliegt, wird in einer zweiten Laugungsstufe mit dem an freier Schwefelsäure verarmten Filtrat der ersten Laugungsstufe in einem druckfest ausgelegten, entsprechenden Reaktor bei Temperaturen von 60 bis 180 °C und ggfs. erhöhtem Druck behandelt. Vorzugsweise wird die Umsetzung bei Temperaturen von 60 bis 80 °C unter Normaldruck vorgenommen. Wenn die Umsetzungsgeschwindigkeit erhöht bzw. die Verweilzeit verkürzt werden soll, ist es zweckmäßig bei Temperaturen oberhalb 100 °C und insbesondere zwischen 160 und 180 °C die Laugung vorzunehmen. In der zweiten Laugungsstufe findet die vollständige Lösung des metallischen Eisens unter Wasserstoffentwicklung statt, wobei die gesamte noch vorhandene freie Säure aus dem Filtrat der ersten Laugungsstufe verbraucht wird. Aus dieser Laugungsstufe resultiert ein $TiO_2$-Konzentrat mit, bezogen auf Trockenfeststoff, 80 % $TiO_2$. Nach Abtrennen des Konzentrats verbleibt als Filtrat eine EisenII-Sulfat-Lösung mit einem Restgehalt von weniger als 1 % freie $H_2SO_4$. Diese schwach saure Eisensulfatlösung wird einer konventionellen Vakuumkristallisationsvorrichtung zugeführt, in der das Eisensulfat als Eisensulfatheptahydrat kristallisiert wird.

Nach der Abtrennung des kristallisierten Eisensulfats wird das verbleibende Filtrat bzw. Zentrifugat mit Kalk neutralisiert, wobei noch in der Lösung ggfs. befindliches Eisen als Eisenhydroxid und das Restsulfat als Gips gemeinsam ausgefällt werden.

Die Abtrennung dieses Eisenhydroxid/Gips-Gemisches erfolgt in üblicher Weise mit Drehfiltern. Der feuchte Feststoff kann dann gefahrlos auf einer Feststoffdeponie deponiert werden. Es verbleibt ein praktisch neutrales Abwasser mit max. 2 g/l Gips.

Die Erfindung weist eine Reihe von Vorteilen auf, die im folgenden zu sehen sind:

- Herstellung eines hochwertigen $TiO_2$-Konzentrats auf einem Basis-Rohstoff;
- Verwendung und damit gleichzeitige Entsorgung des Abfallproduktes Dünnsäure unter Nutzbarmachung des Inhalts an freier Schwefelsäure;

- Umwandeln des Eisens im Ilmenit in direkt verwendbares Eisensulfat-Heptahydrat (z.B. Abwasseraufbereitung) bzw. Spaltung des $FeSO_4$-Heptahydrats in einer Pyrit-Schwefelsäurefabrik in $Fe_2O_3$ und $SO_2/SO_3$;
- weitgehende Vermeidung des Anfalls an umweltbelastenden Stoffen.

Die Erfindung wird anhand eines Fließschemas näher und beispielhaft erläutert.

In einen mit Rührwerk versehenen, druckfest ausgelegten Reaktor wird Dünnsäure aus der $TiO_2$-Pigmentherstellung mit einem Gehalt an freier Schwefelsäure von 24 % sowie Ilmenit einer Korngröße von weniger als 60 μm und einer Zusammensetzung von 45 % $TiO_2$, 34 % FeO, 12 % $Fe_2O_3$, 5 % MgO, 4 % $SiO_2$ eingebracht. Bei einer Temperatur von 180 °C und einem Druck von 10 bar wird das Gut während einer Stunde gelaugt. Nach Abfiltration wird das Zwischenkonzentrat einer Zusammensetzung von 65 % $TiO_2$, 29 % $FeO/Fe_2O_3$, 6 % Gangart mit feinteiliger Kohle versetzt und in einen Reaktor mit zirkulierender Wirbelschicht eingeführt. Die mittlere Verweilzeit hierin beträgt ca. 30 min bei etwa 800 bis 1000 °C. Das reduzierte Gut bzw. Konzentrat hat nunmehr bei einem $TiO_2$-Gehalt von 70 % einen Gehalt an metallischem Eisen von 23 % und enthält 7 % Gangart. Das abgekühlte Gut wird nunmehr in einen weiteren Reaktor der in der ersten Stufe beschriebenen Bauart überführt und mit dem Filtrat der ersten Laugungsstufe versetzt. Dieses Filtrat ist eine Dünnsäure mit einem $H_2SO_4$-Gehalt von ca. 10 %. Die Laugung wird unter Rühren bei einer Temperatur von 100 °C und einen Druck von 1 bar während ca. 1 Stunde vorgenommen. Bei Temperatursteigerung auf ca. 160 bis 180 °C und entsprechendem Druck kann die Verweilzeit erheblich verkürzt werden. Nach Filtration fällt ein $TiO_2$-Konzentrat mit mehr als 80 % $TiO_2$ an. Das Filtrat, das eine schwach saure Eisensulfatlösung mit weniger als 1 % freier Schwefelsäure darstellt, wird einem Vakuumkristallisator zugeführt und das auskristallisierte Eisensulfatheptahydrat abgetrennt. Die Mutterlösung wird neutralisiert. Der gebildete Gips, der etwas Eisenhydroxid enthält, wird abfiltriert und kann zur Deponie gegeben werden. Das neutrale Abwasser enthält ca. 2 g $CaSO_4$/l und kann als solches in den Vorfilter abgelassen werden.

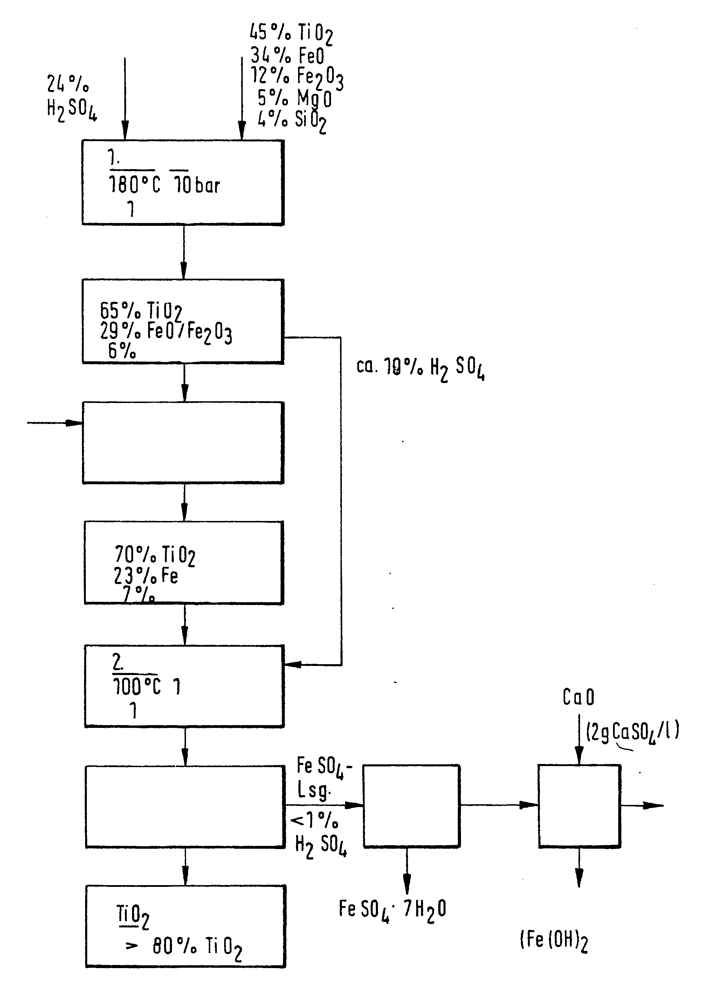

## Patentansprüche

1. Verfahren zur Gewinnung eines $TiO_2$-Konzentrats aus titandioxidhaltigen Vorstoffen, bei dem ein $TiO_2$-haltiger Vorstoff in einer ersten Laugungsstufe bei einer Temperatur von 160 bis 180 °C und erhöhtem Druck mit Dünnsäure gelaugt wird, wobei ein Zwischenkonzentrat mit einem $TiO_2$-Gehalt von ca. 60 % eingestellt wird, das anschließend mit festem kohlehaltigen Brennstoff nach gegebenenfalls vorangehender Oxidation reduziert wird, wobei das reduzierte Produkt mit dem Dünnsäurefiltrat der ersten Laugungsstufe unter vollständigem Verbrauch der freien Schwefelsäure bei Temperaturen zwischen 60 und 180°C und gegebenenfalls erhöhtem Druck gelaugt wird und ein Konzentrat mit einem TiO$_2$-Gehalt von mehr als 80% eingestellt wird und im Filtrat das Eisensulfatheptahydrat auskristallisiert wird.

2. Verfahren nach Anspruch 1, dadurch gekennzeichnet, daß die Reduktion des Zwischenkonzentrats aus der ersten Laugungsstufe in einer zirkulierenden Wirbelschicht vorgenommen wird.

3. Verfahren nach Anspruch 1, dadurch gekennzeichnet, daß die Reduktion des Zwischenkonzentrats aus der ersten Laugungsstufe in einem Drehrohrofen vorgenommen wird.

4. Verfahren nach Anspruch 1 bis 3, dadurch gekennzeichnet, daß als fester Brennstoff Kohle verwendet wird.

5. Verfahren nach den Ansprüchen 1 bis 4, dadurch gekennzeichnet, daß die Laugung des Zwischenkonzentrats in der zweiten Laugungsstufe bei Temperaturen bis 100°C, vorzugsweise bei 60 bis 80°C, vorgenommen wird.

6. Verfahren nach den Ansprüchen 1 bis 4, dadurch gekennzeichnet, daß die Laugung des Zwischenkonzentrats aus der ersten Laugungsstufe in der zweiten Laugungsstufe Temperaturen oberhalb 100°C, vorzugsweise bei 160 bis 180°C, vorgenommen wird.

**Claims**

1. Process for obtaining a TiO$_2$ concentrate from starting materials containing titanium dioxide, in which a TiO$_2$-containing starting material is leached with dilute acid in a first leaching stage at a temperature of 160 to 180°C and at increased pressure, with an intermediate concentrate with a TiO$_2$ content of about 60% being set, which is then reduced with solid, carbonaceous fuel after optionally preceding oxidation, the reduced product being leached with the dilute acid filtrate of the first leaching stage with complete consumption of the free sulphuric acid at temperatures between 60 and 180°C and optionally increased pressure and a concentrate with a TiO$_2$ content of more than 80% being set and the iron sulphate heptahydrate being crystallized out in the filtrate.

2. Process according to Claim 1, characterised in that the reduction of the intermediate concentrate from the first leaching stage is performed in a circulating fluidised bed.

3. Process according to Claim 1, characterised in that the reduction of the intermediate concentrate from the first leaching stage is performed in a rotary kiln.

4. Process according to Claims 1 to 3, characterised in that coal is used as a solid fuel.

5. Process according to Claims 1 to 4, characterised in that the leaching of the intermediate concentrate in the second leaching stage is performed at temperatures of up to 100°C, preferably at 60 to 80°C.

6. Process according to Claims 1 to 4, characterised in that the leaching of the intermediate concentrate from the first leaching stage in the second leaching stage is performed at temperatures above 100°C, preferably at 160 to 180°C.

**Revendications**

1. Procédé d'obtention d'un concentré de TiO$_2$ à partir de matières premières contenant du dioxyde de titane, qui consiste à lixivier une matière première contenant du TiO$_2$, dans un premier stade de lixiviation, à une température de 160 à 180°C et sous pression élevée, par de l'acide dilué, en obtenant un concentré intermédiaire ayant une teneur en TiO$_2$ de 60 % environ, que l'on réduit ensuite par du combustible solide contenant du charbon, le cas échéant après oxydation préalable, le produit réduit étant lixivié par le filtrat d'acide dilué du premier stade de lixiviation, avec consommation totale de l'acide sulfurique libre, à des températures comprises entre 60 et 180°C et, le cas échéant, sous pression élevée, et avec obtention d'un concentré ayant une teneur en TiO$_2$ de plus de 80 % et le sulfate de fer heptahydraté étant séparé du filtrat par cristallisation.

2. Procédé suivant la revendication 1, caractérisé en ce qu'il consiste à effectuer la réduction du concentré intermédiaire provenant du premier stade de lixiviation dans un lit fluidisé circulant.

3. Procédé suivant la revendication 1, caractérisé en ce qu'il consiste à effectuer la réduction du concentré intermédiaire provenant du premier stade de lixiviation dans un four tubulaire rotatif.

4. Procédé suivant l'une des revendications 1 à 3, caractérisé en ce qu'il consiste à utiliser, comme combustible solide, du charbon.

5. Procédé suivant l'une des revendications 1 à 4, caractérisé en ce qu'il consiste à effectuer la lixiviation du concentré intermédiaire au deuxième stade de lixiviation à des températures allant jusqu'à 100°C et, de préférence, à des températures comprises entre 60 et 80°C.

6. Procédé suivant l'une des revendications 1 à 4, caractérisé en ce qu'il consiste à effectuer la lixiviation du concentré intermédiaire provenant du premier stade de lixiviation dans le second stade de lixiviation à des températures supérieures à 100°C et, de préférence, à des températures comprises entre 160 et 180°C.